(19) **Europäisches Patentamt**

**European Patent Office**

**Office européen des brevets**

(11) **EP 1 187 976 B1**

(12) **EUROPÄISCHE PATENTSCHRIFT**

(45) Veröffentlichungstag und Bekanntmachung des Hinweises auf die Patenterteilung:
**04.08.2004  Patentblatt 2004/32**

(51) Int Cl.⁷: $F02D\ 41/22$, F02D 35/02

(21) Anmeldenummer: **00942074.6**

(22) Anmeldetag: **15.06.2000**

(86) Internationale Anmeldenummer:
**PCT/EP2000/005489**

(87) Internationale Veröffentlichungsnummer:
**WO 2000/079113 (28.12.2000 Gazette 2000/52)**

(54) **VERFAHREN ZUR ÜBERWACHUNG EINER BRENNKRAFTMASCHINE**

METHOD FOR MONITORING AN INTERNAL COMBUSTION ENGINE

PROCEDE DE SURVEILLANCE D'UN MOTEUR A COMBUSTION INTERNE

(84) Benannte Vertragsstaaten:
**DE FR GB**

(30) Priorität: **18.06.1999  DE 19927846**

(43) Veröffentlichungstag der Anmeldung:
**20.03.2002  Patentblatt 2002/12**

(73) Patentinhaber: **MTU Friedrichshafen GmbH
88040 Friedrichshafen (DE)**

(72) Erfinder: **RING, Stefan
88045 Friedrichshafen (DE)**

(56) Entgegenhaltungen:
**EP-A- 0 399 069          EP-A- 0 569 608
DE-A- 3 912 416          DE-A- 4 127 950
DE-A- 19 544 613**

## Beschreibung

Die Erfindung betrifft ein Verfahren zur Überwachung einer Brennkraftmaschine nach dem Oberbegriff von Anspruch 1.

Die ordnungsgemäße Funktion einer Brennkraftmaschine wird während des Betriebs von einem elektronischen Motorsteuergerät überwacht. So ist zum Beispiel aus der DE 41 27 950 A 1 bekannt, den Zylinderinnendruck erfassenden Sensor zu überwachen. Hierbei wird geprüft, ob die Druckwerte innerhalb eines Toleranzbandes mit variablen Grenzwerten liegen. Die Grenzwerte wiederum sind eine Funktion der Belastung der Brennkraftmaschine. Druckwerte außerhalb des Toleranzbandes werden als fehlerhaft interpretiert. Als Folgereaktion wird der entsprechende Zylinder in den Leerlaufzustand versetzt. Problematisch ist, dass eine kurzzeitige Störung des Sensorsignals bzw. die Alterung des Sensors zwangsweise eine Zylinderabschaltung bewirkt, d. h. die Brennkraftmaschine befindet sich nicht mehr im Normalbetrieb.

Aus der EP 0 569 608 A 1 ist ein Diagnoseverfahren für Drucksensoren einer Brennkraftmaschine bekannt. Bei diesem Verfahren wird ein Drucksensor dann als fehlerhaft beurteilt und daher deaktiviert, wenn der von ihm gelieferte Messwert eines Zylinderdrucks außerhalb eines Toleranzbandes im Vergleich zu den mit einem mathematischen Modell (Kennfeld) berechneten Druckwerten liegt. Das mathematische Modell ordnet den Messwerten, z. B. der Drehzahl und dem Saugrohrdruck, bestimmte Brennraumdruckwerte zu.

Ausgehend vom zuvor beschriebenen Stand der Technik liegt der Erfindung die Aufgabe zugrunde, den Normalbetrieb der Brennkraftmaschine möglichst lange zu gewährleisten.

Gemäß der Erfindung wird die Aufgabe dadurch gelöst, dass nachdem ein dauerhaft fehlerbehafteter Drucksensor deaktiviert wurde, der weitere Betrieb der Brennkraftmaschine auf der Grundlage der berechneten Druckwerte erfolgt, d. h. die berechneten Druckwerte werden als maßgebliche Druckwerte gesetzt.

In einer Ausgestaltung ist vorgesehen, dass ein dauerhaft fehlerhafter Drucksensor erkannt wird, wenn der Betrag der Abweichung größer einem dritten Grenzwert ist. In Ausgestaltung hierzu ist vorgesehen, dass die gemessenen Druckwerte korrigiert werden, wenn der Betrag der Abweichung kleiner als der dritte Grenzwert ist.

Das erfindungsgemäße Verfahren erlaubt also einen Normalbetrieb der Brennkraftmaschine auch dann, wenn z. B. ein Kurzschluss des Sensors vorliegt. Ein weiterer Vorteil besteht darin, dass ein fehlerhaftes Drucksensorsignal durch die Referenzwerte korrigiert werden kann, beispielsweise bei einem Nullpunkt- bzw. Verstärkung-Fehlers des Drucksensors.

In einer Ausgestaltung ist vorgesehen, dass das mathematische Modell zur Berechnung der Druckwerte des Zylinderraums durch eine Differenzengleichung dargestellt wird. Die Beschreibung der thermodynamischen Zusammenhänge über eine Differenzengteichung bietet den Vorteil, dass das Verfahren echtzeitfähig ist. Dies bedeutet, dass zu jedem Zeitpunkt während des Betriebs der Brennkraftmaschine zu einem gemessenen Druckwert ein entsprechend berechneter Druckwert vorliegt.

In den Figuren ist ein bevorzugtes Ausführungsbeispiel der Erfindung dargestellt. Es zeigen:

Fig. 1    Blockschaltbild
Fig. 2    Erster Progammablaufplan
Fig. 3    Zweiter Programmablaufplan
Fig. 4    Programmablaufplan Berechnung Differenzengleichung
Fig. 5    Diagramm

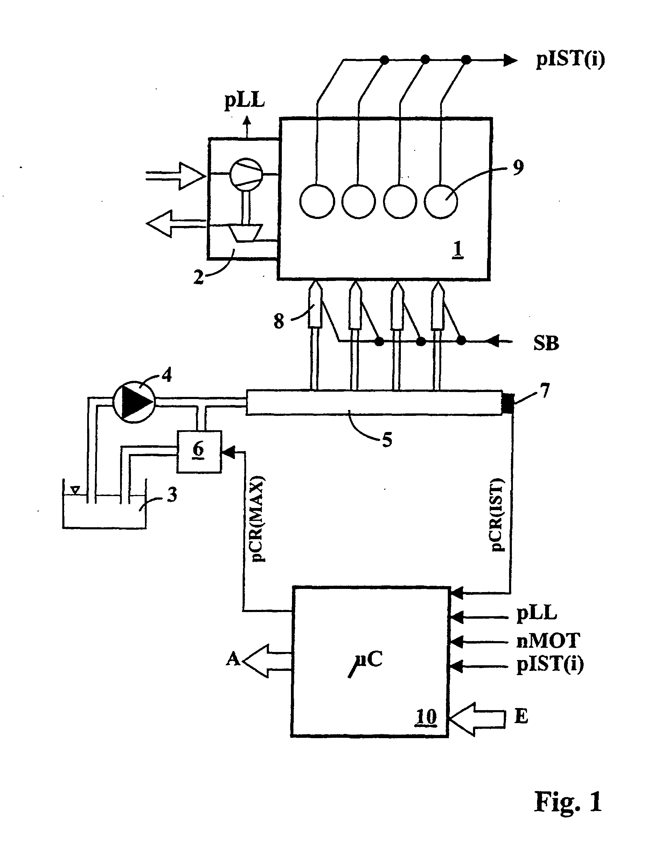

Figur 1 zeigt ein Blockschaltbild einer Brennkraftmaschine mit Speichereinspritzsystem (Common-Rail). Dieses zeigt eine Brennkraftmaschine 1 mit Turbolader und Ladeluftkühler 2, ein elektronischen Motorsteuergerät 10, eine Pumpe 4, einen Hochdruckspeicher (Rail) 5, daran angeschlossene Injektoren 8 und ein Druckbegrenzungsventil 6. Bekanntermaßen fördert die Pumpe 4 aus einem Kraftstofftank 3 den Kraftstoff unter hohem Druck in den Hochdruckspeicher 5. Das Druckniveau des Hochdruckspeichers 5 wird über einen Rail-Drucksensor 7 erfaßt. Aus dem Hochdruckspeicher 5 zweigen Leitungen mit daran angeschlossenen Injektoren 8 für jeden Zylinder der Brennkraftmaschine 1 ab.

Das elektronische Motorsteuergerät 10 steuert und regelt den Zustand der Brennkraftmaschine 1. Als Eingangsgrößen des elektronischen Motorsteuergeräts 10 sind dargestellt: Druck des Zylinderraums $pIST(i)$, der mittels Drucksensoren 9 gemessen wird, Druck $pCR$ (IST) des Hochdruckspeichers 5, Druckniveau $pLL$ des Turboladers mit Ladeluftkühler 2 und Drehzahl $nMOT$ der Brennkraftmaschine 1. Die weiteren für den Betrieb der Brennkraftmaschine 1 relevanten Eingangsgrößen sind mit dem Bezugzeichen E dargestellt. Die Ausgangsgrößen A des elektronischen Motorssteuergeräts 10 sind z. B. Ansteuersignale SB für die Injektoren 8 und das Ansteuersignal $pCR(MAX)$ für das Druckbegrenzungsventil 6. Über das Druckbegrenzungsventil 6 wird das Druckniveau im Hochdruckspeicher 5 eingestellt.

Wie in Figur 1 mit zwei Pfeilen dargestellt, werden dem Turbolader mit Ladeluftkühler 2 einmal Luft zugeführt bzw. Abgase abgeführt.

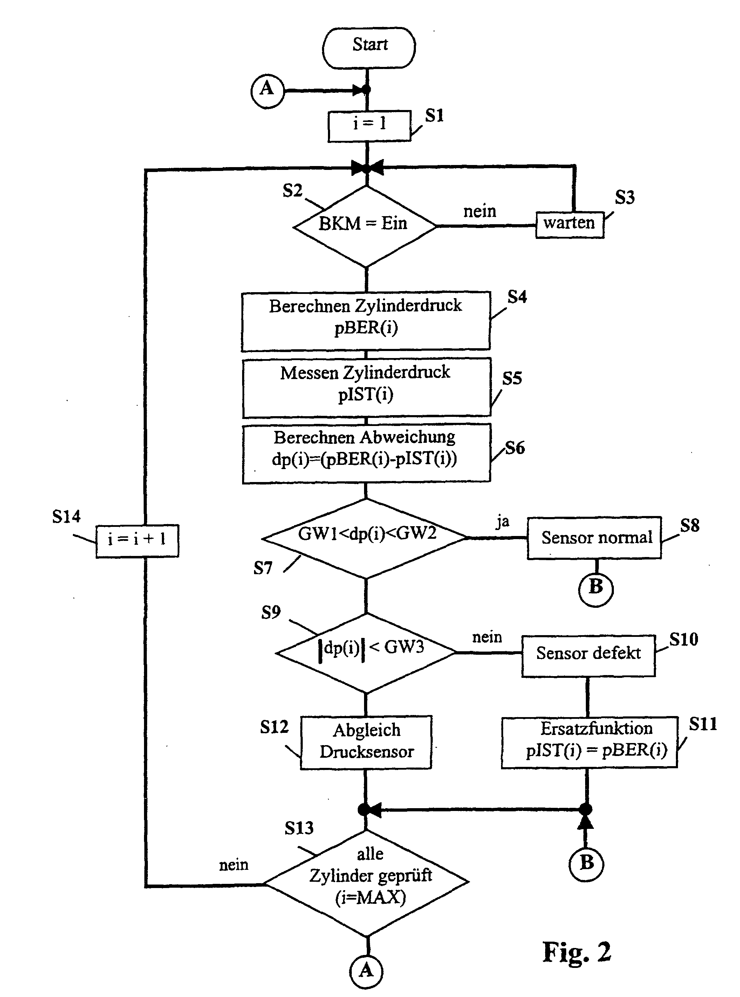

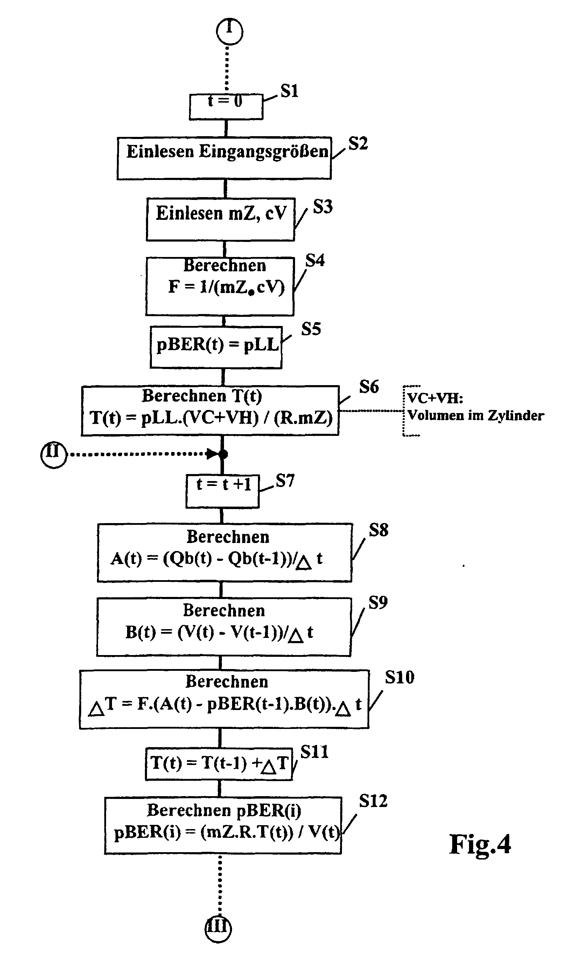

Figur 2 zeigt einen Programmablaufplan zur Berechnung von Druckwerten des Zylinderraums für alle Zylinder. Das Berechnungsverfahren wird nach abgeschlossener Initialisierung des elektronischen Motorsteuergeräts 10 gestartet. Im Schritt S1 wird eine Variable i gleich 1 gesetzt. Diese entspricht der Zylindernumerierung. Bei Schritt S2 wird geprüft, ob die Brennkraftmaschine 1 gestartet ist. Bei negativem Prüfergebnis, d. h. die Brennkraftmaschine 1 ist noch nicht angelassen, wird mit Schritt S3 eine Warteschleife durchlaufen, ist die Brennkraftmaschine 1 angelassen, so wird bei Schritt 54 der Zylinderdruck pBER(i) berechnet. Beim ersten Programmdurchlauf ist dies also das Druckniveau des ersten Zylinders. Das Berechnungsverfahren anhand des mathematischen Modells wird in Verbindung mit Figur 4 erklärt. Danach wird bei Schritt S5 der gemessene Zylinderdruck pIST(i) eingelesen. Im Schritt S6 wird eine Abweichung dp(i) aus berechnetem und gemessenem Zylinderdruck ermittelt. Bei Schritt S7 wird sodann geprüft ob diese Abweichung dp(i) innerhalb eines Toleranzbandes bestehend aus erstem Grenzwert GW1 und'zweltem Grenzwert GW2 liegt. Liegt die Abweichung innerhalb des Toleranzbandes wird bei Schritt S8 festgestellt, dass der Drucksensor sich im Normalzustand befindet. Danach verzweigt der Programmablaufplan zum Punkt B.

Bei negativem Prüfergebnis im Schritt S7 wird im Schritt S9 zusätzlich geprüft ob der Betrag der Abweichung dp(i) kleiner einem dritten Grenzwert GW3 ist. Ist dies der Fall, so wird im Schritt S12 der Drucksensor 9 abgeglichen. Dies ist immer dann der Fall, wenn ein Verstärkungs- bzw. Nullpunkt-Fehler des Drucksensors 9 vorliegt. Bei Schritt S 12 wird somit das gemessene Signal pIST(i) an den Referenzwert, also dem berechnetem Zylinderdruck pBER(i), angepasst. Wird bei Schritt S9 festgestellt, dass der Betrag der Abweichung dp(i) größer als der dritte Grenzwert GW3 ist, so wird bei Schritt S10 bestimmt, dass der Drucksensor dauerhaft geschädigt ist. Eine dauerhafte Schädigung des Drucksensors 9 liegt z. B. bei Leitungsunterbrechung oder Kurzschluss vor. Danach wird bei Schritt S11 der Drucksensor deaktiviert und die,berechneten Druckwerte pBER(i) als gültige Druckwerte gesetzt. Für die weltere Steuerung und Regelung der Brennkraftmaschine 1 wird somit auf diese berechneten Druckwerte pBER(i) zurückgegriffen, d. h. sie stellen eine Ersatzfunktion dar. Bei Schritt S13 wird abgefragt, ob alle Zylinder geprüft worden sind. Ist dies der Fall, so verzweigt der Programmablaufplan zum Punkt A und beginnt wieder mit Schritt S1. Ist das Prüfergebnis im Schritt S13 negativ, d. h. es sind noch nicht alle Zylinder abgefragt, wird mit Schritt S14 die Laufvariable i um 1 erhöht. Danach fährt der Programmablaufplan mit Schritt S2 fort.

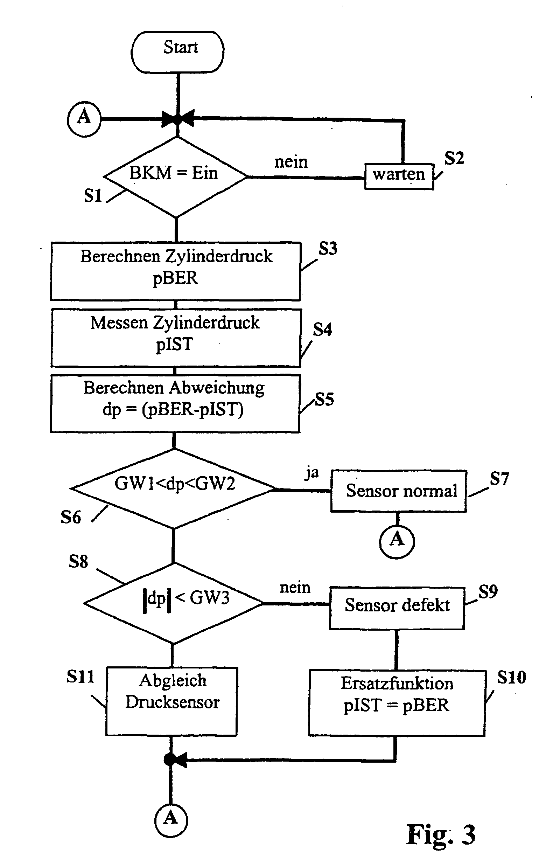

Figur 3 zeigt ein Programmablaufplan zur Berechnung der Druckwerte des Zylinderinnenraums, wenn nur ein Drucksensor verwendet wird. Dieser Programmablaufplan kommt somit dann zur Anwendung, wenn nicht alle Brennräume der Brennkraftmaschine 1 mit einem Drucksensor 9 ausgestattet sind. Der Programmablaufplan entspricht einer reduzierten Ausführung der Figur 2, wobei die Schritte S1 bis S11 den Schritten S2 bis S12 der Figur 2 entsprechen. Das Berechnungsverfahren läuft hierbei analog ab, so dass das oben Gesagte gilt.

Figur 4 zeigt einen Programmablaufplan zur Berechnung des Zylinderinnendrucks pBER(1) mittels des mathematischen Modells. Der Programmablaufplan beginnt beim Punkt i, wenn die Berechnung des Drucks zum ersten Mal durchlaufen wird, d. h. nach dem Startvorgang der Brennkraftmaschine 1. Im Schritt S1 wird ein Abfragezeitpunkt t gleich 0 gesetzt. Beim Schritt S2 werden danach die Eingangsgrößen der Brennkraftmaschine 1 eingelesen. Für die Berechnung notwendige Eingangsgrößen sind das Druckniveau pLL des. Turboladers mit Ladeluftkühler 2, die Kraftstoffmasse, entsprechend dem einzuspritzenden Kraftstoffvolumen, die Kraftstofftemperatur, und die Drehzahl nMOT bzw. der Kurbelwellenwinkel. Bei Schritt S3 wird die Warmekapazität bei isochorer Erwärmung cV und die Masse im Zylinder mZ eingelesen. Die Masse im Zylinder mZ kann tabelliert oder durch ein anderes Verfahren ermittelt werden. Danach wird aus den beiden Größen cV und mZ ein Faktor F berechnet, Schritt S4. Im Schritt S5 wird dem berechneten Druck des Zylinderraums pBER(t) das Druckniveau des Ladeluftkühlers pLL zugewiesen. Dieser Wert dient als Anfangswert für den unteren Totpunkt des Ladungswechsels. Damit ist über die Masse mZ im Zylinder und das Volumen auch die Temperatur des Gases bekannt, Schritt S6:

$$T(t) = pLL \, (VC + VH) \, / \, (R.mZ)$$

mit

| | |
|---|---|
| pLL | ladeluftdruck |
| VC | Totvolumen |
| VH | Volumen Zylinder |
| R | Gaskonstante |
| mZ | Masse im Zylinder |

Bei Schritt S7 wird der Abfragezeitpunkt t um 1 erhöht. Bei Schritt S8 wird eine Größe A(t) entsprechend der Wärmeerhöhung während des Abfragezeitraums $\Delta t$ berechnet. Danach wird bei Schritt S9 eine Größe B(t) entsprechend der Volumenveränderung während des Abfragezeitraums $\Delta t$ berechnet. Bei Schritt S10 wird die Temperaturerhöhung im Zylinderinnenraum während des Abfragezeitraums aus dem Faktor F, den Größen A(t) und B(t), sowie dem, ein Abfragetakt zuvor berechneten, Innendruck pBer(t-1), bestimmt. Es gilt:

$$\Delta T = F.((A(t) - pBER \, (t-1).B(t)).\Delta t$$

worin

| | |
|---|---|
| $\Delta T$ | Temperaturerhöhung |
| $\Delta t$ | Abfragezeitraum (t, t-1) |
| F | Faktor f - (cV, mZ) |
| A | Wärmeänderung im Zylinder ($\Delta Qb/\Delta t$) |
| pBER | Druck im Zylinder (berechnet) |
| B | . Volumenänderung im Zylinder ($\Delta V/\Delta t$)) |

bedeuten, mit

cV    Wärmekapazität bei isochorer Erwärmung
mZ    Masse im Zylinder
Qb    Wärme des verbrannten Kraftstoffes
V    Volumen im Zylinder (VC, VH)
t    aktueller Abfrage-Zeitpunkt
t-1    vorheriger Abfrage-Zeitpunkt

Die Differenzengleichung stellt die thermodynamischen Zusammenhänge im Zylinderinnenraum dar. Die mathematisch aufwendig zu berechnenden thermodynamischen Zusammenhänge werden hierbei über diese einfache Differenzengleichung dargestellt. Hierdurch wird der Vorteil erzielt, dass das Verfahren echtzeitfähig Ist Dies bedeutet dass zu jedem gemessenen Druckwert des Zylinderinnenraums pIST(i) ein entsprechender berechneter Wert pBER(i) zeitgleich vorliegt. Das in den Schritten S8 und S10 dargestellte Verfahren verwendet zwei Zeitpunkte (t, t-1). Selbstverständlich ist es auch möglich das Verfahren über mehrere Zeitwerte auszuführen.

Bei Schritt S 11 wird zum Temperaturwert des vorhergehenden Abfrage-Zeitpunkts T(t-1). die Temperaturerhöhung addiert. Dies ergibt den neuen Temperaturwert T(t). Bei Schritt S 12 wird sodann aus der Temperatur T(t) über die allgemeine Gasgleichung der berechnete Druckwert pBER(i) gebildet. Danach verzweigt der Programmablaufplan zum Punkt III, entsprechend dem Schritt S5 aus Figur 2 bzw. Schritt S4 aus Figur 3. Für den nächsten zu berechnenden Druckwert pBER(i) beginnt der Programmablaufplan beim Punkt II.

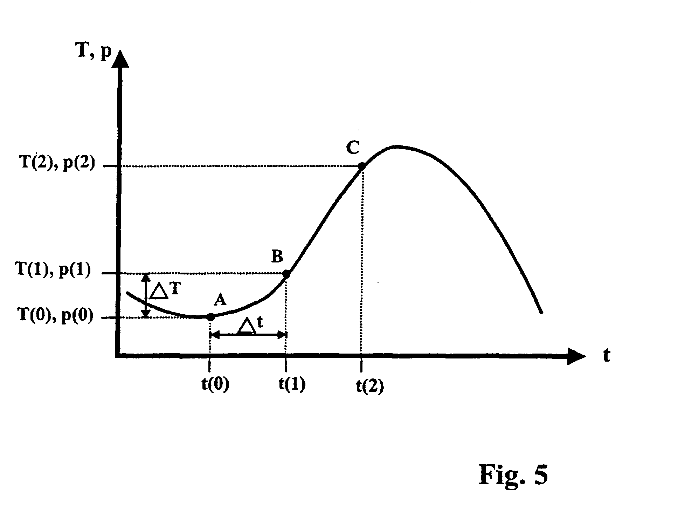

Figur 5 zeigt in vereinfachter Darstellung den Temperaturverlauf T bzw. Druckvenauf p im Zylinderraum der Brennkraftmaschine 1 Ober der Zeit t. Diese sind als sinusförmige Kurve dargestellt. Der Arbeitspunkt A auf der Kurve ergibt sich aus den zum Zeitpunkt t(0) gemessenen Wert p(0). Nach dem Startvorgang ist dies das Druckniveau pLL des Ladeluftkühlers 2. Dieser Wert ist somit der Startwert für das Berechnungsverfahren. Der Wert T(0) ergibt sich aus dem Wert p(0) und der Gasgleichung, entsprechend dem Schritt S6 der Fig.4. Zum Zeitpunkt t(1) wird gemäß dem Berechnungsverfahren nach Figur 4 die Temperaturerhöhung $\Delta T$ berechnet. Dies ergibt den Punkt B auf der Kurve mit den Ordinatenwerten T(1) bzw. p(1). Zum Zeitpunkt t(2) wird die erneute Temperaturerhöhung berechnet. Dies ergibt den Punkt C auf der Kurve. Die weitere Berechnung der Temperatur- bzw. Druckwerte läuft in gleicher Weise ab.

Die Verwendung einer Differenzengleichung anstelle einer Exponentengleichung für die thermodynamischen Vorgänge bietet den Vorteil, dass das Modell echtzeitfähig ist. Indem zu jedem Zeitpunkt zum gemessenen Zylinderinnendruck pIST(i) ein berechneter Wert pBER(i) zur Verfügung steht, läßt sich der Drucksensor 9 überwachen und bei Drift . abgleichen. Ein dauerhaft geschädigter Drucksensor wird ebenso zweifelsfrei erkannt. Der weitere Betrieb der Brennkraftmaschine wird für diesen Fall aufgrund der berechneten Druckwerte pBER(i) gewährleistet.

Bezugszeichenliste:

1    Brennkraftmaschine
2    Turbolader mit Ladeluftkühler
3    Kraftstofftank
4    Pumpe
5    Hochdruckspeicher (Rail)
6    Druckbegrenzungsventil
7    Rail-Drucksensor
8    Injektor
9    Drucksensor Zylinder
10    Elektronisches Motorsteuergerät

**Patentansprüche**

1. Verfahren zur Überwachung einer Brennkraftmaschine (1) bei dem mittels eines Drucksensors (9) Druckwerte (pIST(i), i=1,2...n) des Zylinderraums der Brennkraftmaschine (1) gemessen werden und anhand der Druckwerte (p(IST(i)) der Zustand des Drucksensors (9) überwacht wird, bei dem aus aktuellen Kenngrößen der Brennkraftmaschine (1) mittels eines mathematischen Modells kontinuierlich Druckwerte (pBER(i)) des Zylinderraumes berechnet werden, so dass zu jedem Zeitpunkt ein gemessener Druckwert (pIST(i)) und ein berechneter Druckwert (pBER(i)) zeitgleich vorliegen, eine Abweichung (dp(i)) von gemessenen (pIST(i)) und berechneten Druckwerten (pBER(i)) bestimmt wird, ein fehlerhafter Zustand des Drucksensors (9) erkannt wird, wenn die Abweichung (dp(i)) außerhalb eines Toleranzbandes aus erstem (GW1) und zweitem Grenzwert (GW2) liegt und mit Erkennen eines dauerhaft fehlerbehafteten Drucksensors (9) dieser deaktiviert wird, **dadurch gekennzeichnet, dass** die berechneten Druckwerte (pBER(i)) als maßgebliche Druckwerte gesetzt werden und der weitere Betrieb der Brennkraftmaschine (1) auf Grundlage der berechneten Druckwerte (pBER(i)) erfolgt.

2. Verfahren nach Anspruch 1, **dadurch gekennzeichnet, dass** ein dauerhaft fehlerbehafter Drucksensors (9) erkannt wird, wenn der Betrag der Abweichung (|(dp(i)|) größer einem dritten Grenzwert (GW3) ist.

3. Verfahren nach Anspruch 1, **dadurch gekennzeichnet, dass** ein Normalzustand des Drucksensors (9) festgestellt wird, wenn die Abweichung (dp(i)) innerhalb des Toleranzbandes liegt.

**4.** Verfahren nach Anspruch 2, **dadurch gekennzeichnet, dass** die gemessenen Druckwerte (pIST(i)) korrigiert werden, wenn der Betrag der Abweichung (|(dp(i)|) kleiner dem dritten Grenzwert (GW3) ist.

**5.** Verfahren nach Anspruch 1, **dadurch gekennzeichnet, dass** das mathematische Modell durch eine Differenzengleichung in der Form

$$\Delta T = F. ((A(t) - pBER(t-1). B(t)) . \Delta t$$

beschrieben wird, worin

| | |
|---|---|
| $\Delta T$ | Temperaturerhöhung |
| $\Delta t$ | Zeitraum (t, t-1) |
| F | Faktor (cV, mZ) |
| A | Wärmeänderung im Zylinder ($\Delta Qb/\Delta t$) |
| pBER | Druck im Zylinder (berechnet) |
| B | Volumenänderung im Zylinder ($\Delta V/\Delta t$) |

bedeuten, mit

| | |
|---|---|
| cV | Wärmekapazität bei isochorer Erwärmung |
| mZ | Masse im Zylinder |
| Qb | Wärme des verbrannten Kraftstoffes |
| V | Volumen im Zylinder |
| t | aktueller Abfrage-Zeitpunkt |
| t-1 | vorheriger Abfrage-Zeitpunkt |

**6.** Verfahren nach Anspruch 5, **dadurch gekennzeichnet, dass** als Startgröße für das mathematische Modell das Druckniveau (pLL) der vom Turbolader mit Ladeluftkühler (2) verdichteten Luft verwendet wird.

**Claims**

**1.** Method for monitoring an internal combustion engine (1), in which pressure values (pIST(i), i=1, 2... n) of the cylinder space of the internal combustion engine (1) are measured by means of a pressure sensor (9) and the state of the pressure sensor (9), in which pressure values (pBER(i)) of the cylinder space are calculated continuously by means of a mathematical model from current characteristic variables of the internal combustion engine (1), is monitored by means of the pressure values (p(IST(i)), with the result that a measured pressure value (pIST(i)) and a calculated pressure value (pBER(i)) are present simultaneously at any time, a deviation (dp(i)) from measured pressure values (pIST(i)) and calculated pressure values (pBER(i)) is determined, an incorrect state of the pressure sensor (9) is detected if the deviation (dp(i) ) lies outside a tolerance band composed of the first limiting value (GW1) and second limiting value (GW2) and when a pressure sensor (9) which is continuously faulty is detected said pressure sensor is deactivated, **characterized in that** the calculated pressure values (pBER(i)) are set as decisive pressure values and the internal combustion engine (1) continues to operate on the basis of the calculated pressure values (pBER(i)) .

**2.** Method according to Claim 1, **characterized in that** a pressure sensor (9) which is continuously faulty is detected if the absolute value of the deviation (|(dp(i)|) is higher than a third limiting value (GW3).

**3.** Method according to Claim 1, **characterized in that** a normal state of the pressure sensor (9) is determined if the deviation (dp(i)) lies within the tolerance band.

**4.** Method according to Claim 2, **characterized in that** the measured pressure values (pIST(i)) are corrected if the absolute value of the deviation (|(dp(i)|) is lower than the third limiting value (GW3).

**5.** Method according to Claim 1, **characterized in that** the mathematical model is described by a differential equation in the form $\Delta T = F.((A(t) - pBER(t-1).B(t)).\Delta t$ where

| | |
|---|---|
| $\Delta T$ | = increase in temperature |
| $\Delta t$ | = time period (t, t-1) |
| F | = factors (cV, mZ) |
| A | = thermal change in the cylinder ($\Delta Qb/\Delta t$) |
| pBER | = pressure in the cylinder (calculated) |
| B | = change in volume in the cylinder ($\Delta V/\Delta t$) |

and

| | |
|---|---|
| cV | = thermal capacity for isochore heating |
| mZ | = mass in cylinder |
| Qb | = heat of combusted fuel |
| V | = volume in cylinder |
| t | = current interrogation time |
| t-1 | = previous interrogation time |

**6.** Method according to Claim 5, **characterized in that** the pressure level (pLL) of the air which is compressed by the turbocharger with charge air cooler (2) is used as the starting variable for the mathematical model.

**Revendications**

**1.** Procédé de surveillance d'un moteur à combustion interne (1) avec lequel les valeurs de la pression (pIST(i), i = 1, 2 ... n) de la chambre des cylindres du moteur à combustion interne (1) sont mesurées au moyen d'un capteur de pression (9) et l'état du capteur de pression (9) est surveillé au moyen des valeurs de la pression (pIST(i)), avec lequel les valeurs continues de la pression (pBER(i)) de la chambre des cylindres sont calculées au moyen d'un modèle mathématique à partir des grandeurs caractéristiques courantes du moteur à combustion interne (1) de manière à disposer à tout moment simultanément d'une valeur de pression mesurée (pIST(i)) et d'une valeur de pression calculée (pBER(i)), un écart (dp(i)) entre les valeurs de pression mesurée (pIST(i)) et calculée (pBER(i)) est déterminé, une condition de défaut du capteur de pression (9) est détectée lorsque l'écart (dp(i)) se trouve en dehors d'une plage de tolérance composée d'une première (GW1) et d'une deuxième valeur limite (GW2) et la détection d'un défaut permanent du capteur de pression (9) désactive celui-ci, **caractérisé en ce que** les valeurs calculées de la pression (pBER(i)) sont utilisées comme valeurs de pression prédominantes et la suite du fonctionnement du moteur à combustion interne (1) s'effectue sur la base des valeurs calculées de la pression (pBER(i)).

2. Procédé selon la revendication 1, **caractérisé en ce qu'**un défaut permanent du capteur de pression (9) est détecté lorsque la valeur de l'écart (|(dp(i)|) est supérieure à une troisième valeur limite (GW3).

3. Procédé selon la revendication 1, **caractérisé en ce qu'**une condition normale du capteur de pression (9) est constatée lorsque l'écart (dp(i)) se trouve dans la plage de tolérance.

4. Procédé selon la revendication 2, **caractérisé en ce que** les valeurs mesurées de la pression (pIST (i)) sont corrigées lorsque la valeur de l'écart (|(dp (i)|) est inférieure à la troisième valeur limite (GW3).

5. Procédé selon la revendication 1, **caractérisé en ce que** le modèle mathématique est décrit par une équation différentielle sous la forme

$\Delta T = F.((A(t) - pBER(t-1).B(t)).\Delta t$
où
$\Delta T$ désigne l'augmentation de température
$\Delta t$ désigne la période (t, t-1)
F est un facteur (cV, mZ)
A désigne le changement de température dans le cylindre ($\Delta Qb/\Delta t$)
pBER désigne la pression dans le cylindre (calculée)
B désigne le changement de volume dans le cylindre ($\Delta V/\Delta t$),
avec
cV désignant la capacité thermique dans le cas d'un échauffement isochore
mZ la masse dans le cylindre
Qb la chaleur du carburant consumé
V le volume dans le cylindre
t le moment d'interrogation courant
t-1 le moment d'interrogation précédent.

6. Procédé selon la revendication 5, **caractérisé en ce que** la grandeur de départ utilisée pour le modèle mathématique est le niveau de pression (pLL) de l'air comprimé par le turbocompresseur à refroidisseur d'air de charge (2).

**Fig. 1**

Start

(A)

i = 1 — S1

S2
BKM = Ein —— nein —— warten — S3

Berechnen Zylinderdruck
pBER(i) — S4

Messen Zylinderdruck
pIST(i) — S5

Berechnen Abweichung
dp(i)=(pBER(i)-pIST(i)) — S6

S14
i = i + 1

GW1<dp(i)<GW2 —— ja —— Sensor normal — S8

S7

(B)

S9
|dp(i)| < GW3 —— nein —— Sensor defekt — S10

S12 Abgleich
Drucksensor

Ersatzfunktion
pIST(i) = pBER(i) — S11

(B)

S13
nein

alle
Zylinder geprüft
(i=MAX)

(A)

**Fig. 2**

8

Fig. 3

(I)

$t = 0$  — S1

Einlesen Eingangsgrößen — S2

Einlesen mZ, cV — S3

Berechnen
$F = 1/(mZ_\bullet cV)$  — S4

$pBER(t) = pLL$ — S5

Berechnen T(t)
$T(t) = pLL.(VC+VH) / (R.mZ)$  — S6

VC+VH:
Volumen im Zylinder

(II) •

$t = t + 1$ — S7

Berechnen
$A(t) = (Qb(t) - Qb(t-1))/\triangle t$  — S8

Berechnen
$B(t) = (V(t) - V(t-1))/\triangle t$  — S9

Berechnen
$\triangle T = F.(A(t) - pBER(t-1).B(t)).\triangle t$  — S10

$T(t) = T(t-1) + \triangle T$ — S11

Berechnen pBER(i)
$pBER(i) = (mZ.R.T(t)) / V(t)$  — S12

**Fig.4**

(III)

Fig. 5